## Europäisches Patentamt
## European Patent Office
## Office européen des brevets

(11) Veröffentlichungsnummer: **0 059 889**
**B1**

(12) **EUROPÄISCHE PATENTSCHRIFT**

(45) Veröffentlichungstag der Patentschrift:
**13.11.85**

(51) Int. Cl.⁴: **H 02 H 3/347**

(21) Anmeldenummer: **82101444.6**

(22) Anmeldetag: **25.02.82**

(54) **Verfahren zur Überwachung von Leiterströmen und Anordnung zur Durchführung des Verfahrens.**

(30) Priorität: **09.03.81 DE 3108906**

(43) Veröffentlichungstag der Anmeldung:
**15.09.82 Patentblatt 82/37**

(45) Bekanntmachung des Hinweises auf die Patenterteilung:
**13.11.85 Patentblatt 85/46**

(84) Benannte Vertragsstaaten:
**BE FR IT NL**

(56) Entgegenhaltungen:
**EP - A - 0 014 938**
**DE - A - 2 555 255**
**DE - B - 2 550 060**
**US - A - 3 614 533**

(73) Patentinhaber: **Siemens Aktiengesellschaft, Berlin und München Wittelsbacherplatz 2, D-8000 München 2 (DE)**

(72) Erfinder: **Breimesser, Fritz, Dipl.-Ing., Dompfaffstrasse 49, D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf ein Verfahren bzw. eine Anordnung zur Überwachung von Leiterströmen auf einen Fehlerstrom, der die Vormagnetisierung eines Magnetkreises ändert, gemäß dem Oberbegriff des Anspruchs 1 bzw. 2.

Elektrische Anlagen werden bekanntlich durch Fehlerstrom-Schutzschaltungen überwacht, bei denen die Leiter des zu schützenden Stromkreises durch den Ringkern eines Magnetkreises hindurchgeführt sind und als Primärwicklung dienen. Die Sekundärwicklung ist im allgemeinen mit dem Auslöser des Schalters der Anlage verbunden. Solche Fehlerstrom-Schutzschalter arbeiten nach dem Prinzip eines Differenztransformators. Im ungestörten Betrieb ist die Summe der Primärströme Null. Im Falle eines Isolationsfehlers fließt ein Fehlerstrom zur Erde zum Sternpunkt des Transformators zurück. Bei periodischen Differenzströmen genügend hoher Amplitude im Primärstromkreis wird über den aus einer hochpermeablen Legierung bestehenden Ringkern soviel Energie in den Sekundärkreis übertragen, daß ein im Sekundärkreis angeordneter Auslöser anspricht, der im allgemeinen auf einen Leistungsschalter des Stromkreises einwirkt.

Wegen der Zunahme nichtlinearer Verbraucher in den Stromversorgungsnetzen können im Störungsfall auch Gleichströme auftreten. Solche nichtperiodischen Differenzströme können mit einer bekannten Anordnung erfaßt werden, bei der die Sekundärwicklung mit digitalen Pulsfolgen gespeist wird. Der Magnetkern wird durch diese Pulsfolgen jeweils schrittweise ummagnetisiert. Durch einen Fehlerstrom erhält der Magnetkern eine Vormagnetisierung, die eine Unsymmetrie in den zur Ummagnetisierung erforderlichen Pulsfolgen bewirkt, aus der das Ausgangssignal abgeleitet wird (DE-A-2 907 171).

In den genannten Anordnungen sind Magnetkreise vorgesehen, die einen Ringkern aus einer hochpermeablen Legierung mit flacher magnetischer Kennlinie enthalten. Solche Kerne sind verhältnismäßig teuer. Es ist eine Ausführungsform einer Einrichtung zur Überwachung von Leiterströmen auf einen Differenzstrom bekannt (DE-A-2 555 255), der die Vormagnetisierung eines Magnetkernes mit wenigstens annähernd rechteckiger Magnetisierungsschleife ändert. Die Gleichstromkomponente des Differenzstromes kann durch die Verwendung zweier getrennter Magnetkerne, denen je eine Schreibwicklung (Vormagnetisierungswicklung) und eine Lesewicklung (Meßwicklung) zugeordnet sind, erfaßt werden. An der Schreibwicklung liegt dabei jeweils eine Wechselspannung an, die eine Gleich- und Wechselstromkomponente enthält. Diese sind so bemessen, daß im fehlerstromfreien Zustand die Vormagnetisierung nur zwischen einem Sättigungswert und einem Wert, der unterhalb der Remanenz-Induktion liegt, pendelt. Ein unzulässig hoher Fehlergleichstrom wird daran erkannt, daß dieser eine Ummagnetisierung eines der beiden Magnetkerne bewirkt. Dadurch wird an der diesem Magnetkern zugeordneten Lesewicklung eine höhere Spannung induziert als im fehlerstromfreien Zustand.

Der Erfindung liegt nun die Aufgabe zugrunde, ein Verfahren und eine Anordnung zur Überwachung von Leiterströmen auf nichtperiodische Differenzströme anzugeben, bei dem die Vormagnetisierung eines einzigen Magnetkernes mit wenigstens annähernd rechteckiger Schleife geändert wird.

Die genannte Aufgabe wird gelöst durch die kennzeichnenden Merkmale des Anspruchs 1 bzw. 2. In der Anordnung zur Durchführung des Verfahrens ist der Magnetkern mit einer Schreibwicklung und einer Lesewicklung versehen. Ein Taktgenerator liefert Schreibsignale für die Schreibwicklung und eine Koinzidenzschaltung, die eine logische Verknüpfung der Schreib- und der Lesesignale herstellt. In dieser Ausführungsform kann der Magnetkreis sowohl einen Ringbandkern als auch einen Ferritkern enthalten. Das Kernmaterial mit rechteckiger Kennlinie wird so ausgewählt, daß die Koerzitivfeldstärke den Meßbereich für den Fehlerstrom bestimmt. Vorzugsweise kann die Koerzitivfeldstärke etwa doppelt so groß wie die durch einen noch zulässigen Nennfehlerstrom erzeugte Feldstärke gewählt werden. Vom Taktgenerator wird eine vorgegebene Folge von Prüf- und Ummagnetisierungspulsen an einen Schreibkreis gegeben, der die Schreibwicklung des Magnetkreises ansteuert. Der Prüfpuls und der diesem überlagerte Ummagnetisierungspuls erzeugen im Magnetkreis jeweils vorbestimmte Feldstärken mit gleichen Vorzeichen. Bei jeder neuen Folge von Prüf- und Ummagnetisierungspulsen wird dieses Vorzeichen geändert. Die während der Pulse an der Lesewicklung induzierte Spannung wird einem Lesekreis zugeführt, der nur dann ein digitales Ausgangssignal liefert, wenn die im Lesekreis induzierte Spannung einen vorbestimmten Grenzwert betragsmäßig überschreitet. Dieser Grenzwert wird so gewählt, daß die im Lesekreis induzierte Spannung diesen nur dann betragsmäßig überschreitet, wenn während eines der Prüf- und Ummagnetisierungspulse die Koerzitivfeldstärke des Magnetkreises überschritten und dieser ummagnetisiert wird. Sind beispielsweise die vom Prüfpuls bzw. Ummagnetisierungspuls erzeugten Feldstärken halb bzw. wenigstens doppelt so groß wie die Koerzitivfeldstärke, so wird ein Differenzstrom der eine Feldstärke erzeugt, die betragsmäßig größer ist als die halbe Koerzitivfeldstärke, daran erkannt, daß der Grenzwert der induzierten Spannung während wenigstens eines der Ummagnetisierungspulse betragsmäßig unterschritten wird.

In der beschriebenen Anordnung erhält man eine digitale Funktion der gesamten Anordnung und einen entsprechend einfachen Hardware-Aufbau, der leicht integriert werden kann. Eine derartige digitale Elektronik erfordert keine eng tolerierten Bauteile und auch keinerlei Abgleicharbeiten. Die Ansprechzeiten der Überwachungsanordnung können auf etwa 1 bis 2 ms begrenzt werden.

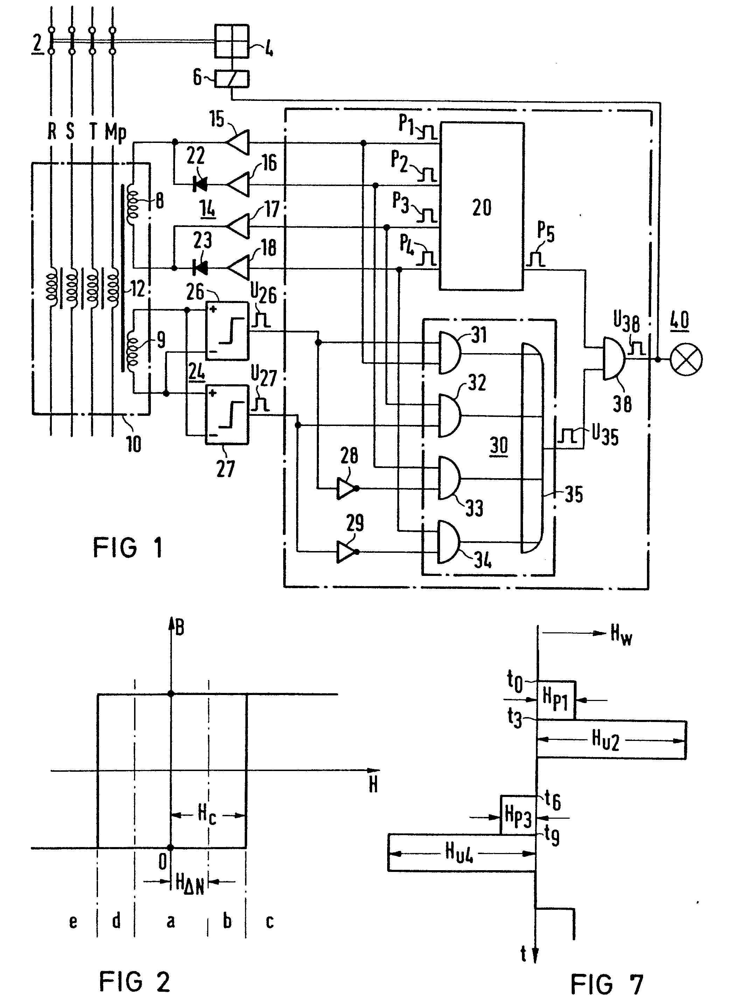

Zur weiteren Erläuterung der Erfindung wird auf die Zeichnung Bezug genommen, in deren Figur 1

**0 059 889**

ein Ausführungsbeispiel einer Anordnung zur Durchführung des Verfahrens nach der Erfindung als Wirkschaltplan schematisch veranschaulicht ist. Figur 2 zeigt die Magetisierungskennlinie des Magnetkerns und in den Figuren 3 bis 6 sind die Schreibimpulse jeweils in einem Diagramm veranschaulicht. Figur 7 zeigt die Wirkung der Schreibimpulse im Magnetkern, und in den Figuren 8 bis 10 sind die Spannungsimpulse an der Lesewicklung und die daraus abgeleiteten Digitalsignale in verschiedenen Diagrammen schematisch dargestellt. Figur 11 zeigt digitale Ausgangsimpulse des Taktgenerators, die als Maske dienen.

Nach Figur 1 enthält die Drehstromzuleitung einer Anlage, deren Phasen mit R, S und T und deren Mittelpunktsleiter mit Mp bezeichnet sind, einen Leistungsschalter 2, dessen Schaltschloß 4 mit einem Auslöser 6 versehen ist. Die Drehstromleiter R, S und T sowie der Mittelpunktsleiter Mp sind durch den Magnetkern 12 eines Magnetkreises 10 hindurchgeführt, der mit zwei Sekundärwicklungen versehen ist, von denen eine als Schreibwicklung 8 und die andere als Lesewicklung 9 dient und die über den Kern 12 magnetisch gekoppelt sind.

Im Schreibkreis 14 ist ein Taktgenerator 20 vorgesehen, der auf getrennten und nicht näher bezeichneten Ausgangsleitungen digitale Pulse $P_1$ bis $P_4$ liefert und die Ablaufsteuerung übernimmt. Die Pulse $P_1$ und $P_3$ dienen als Prüfpulse und werden über Verstärker, sogenannte Treiber 15 bzw. 17, auf die Schreibwicklung 8 gegeben. Die Pulse $P_2$ und $P_4$ dienen als Ummagnetisierungspulse und werden ebenfalls über Treiber 16 bzw. 18 in umgekehrter Richtung der Schreibwicklung 8 zugeführt. Die Ausgangsleitungen der Treiber 16 und 18 enthalten jeweils eine Entkopplungsdiode 22 bzw. 23.

Die in der Lesewicklung 9 induzierten Pulse werden im Lesekreis 24 über elektronische Komparatoren 26 und 27 digitalisiert und ihre Ausgangssignale $U_{26}$ und $U_{27}$ werden einer Koinzidenzschaltung 30 zugeführt, die ein UND-ODER-Gatter darstellt und vier UND-Gatter 31 bis 34 enthält, dem ein ODER-Gatter 35 nachgeschaltet ist. In den Ausgangsleitungen der Komparatoren 26 und 27 sind zusätzliche Inverter 28 und 29 angeordnet. Das Ausgangssignal $U_{35}$ der Koinzidenzschaltung 30 wird einem Eingang eines weiteren UND-Gatters 38 zugeführt, dessen zweitem Eingang eine Folge von Pulsen $P_5$ des Taktgebers 20 vorgegeben ist, die als Maske dienen. Es erscheint somit ein Überwachungssignal $U_{38}$, wenn die Maskenpulse $P_5$ mit einem Ausgangssignal $U_{35}$ der Koinzidenzschaltung 30 zusammenfallen.

Das Überwachungssignal $U_{38}$ hat eine Warnfunktion und kann eine akustische oder optische Anzeige bewirken, was in der Figur durch eine Lampe 40 angedeutet ist, die beispielsweise eine Lumineszenzdiode sein kann.

Das Überwachungssignal $U_{38}$ kann jedoch auch zur Abschaltung der nicht dargestellten Anlage verwendet und zu diesem Zweck dem Auslöser 6 zugeführt werden, der über das Schloß 4 den Schalter 2 betätigt.

Das weichmagnetische Material des Magnetkerns 12 hat nach Figur 2 eine annähernd rechteckige Magnetisierungskennlinie, deren Induktion B sich dementsprechend bei einer vorbestimmten Koerzitivfeldstärke $H_c$ sprunghaft ändert. In Abhängigkeit von verschiedenen Größen der Feldstärke H, die im Magnetkern 12 sowohl durch einen Differenzstrom FI als auch durch die Schreibimpulse $P_1$ bis $P_4$ erzeugt werden, sind verschiedene Anzeigebereiche a bis e angenommen. Vom Nenn-Fehlerstrom FI soll beispielsweise eine Feldstärke $H_{\Delta N}$ induziert werden.

Wird beispielsweise die Amplitude der Prüfpulse $P_1$ und $P_3$ so gewählt, daß der von ihnen erzeugte Feldstärkebetrag

$$|H_{P1,3}| = H_{\Delta N} = 1/2\, H_c$$

ist, so bleibt nach der folgenden Tabelle im Anzeigebereich a der Feldstärke H der Differenzstrom FI kleiner als der zulässige Fehlerstrom $I_{\Delta N}$. Es muß somit nur die vom Schreibpuls, beispielsweise dem Prüfpuls $P_1$, im Magnetkreis 12 induzierte Feldstärke $H_p$ entsprechend gewählt werden. Die üblicherweise aus H-Signalen (high) oder L-Signalen (low) bestehenden Ausgangssignale $U_{26}$ und $U_{27}$ der Komparatoren 26 und 27 im Lesekreis 24 ändern sich nicht wesentlich. Wird nun beispielsweise die Amplitude der Ummagnetisierungspulse $P_2$ und $P_4$ entsprechend einer Feldstärke

$$|H_{u2,4}| = 2 \cdot H_c$$

gewählt, so löst der Fehlerstrom FI im Vergleich zum zulässigen Fehlerstrom $I_{\Delta N}$ entsprechend der folgenden Tabelle in den Anzeigebereichen b bis e folgende digitale Signale $U_{26}$ bzw. $U_{27}$ aus:

3

0 059 889

| Anzeigebereich | FI | $U_{26}$ | | $U_{27}$ | |
|---|---|---|---|---|---|
| a | $-I_{\Delta N} < FI < I_{\Delta N}$ | L | H | L | H |
| b | $I_{\Delta N} < FI < 2 \cdot I_{\Delta N}$ | H | L | L | H |
| c | $2 \cdot I_{\Delta N} < FI$ | L | L | L | L |
| d | $-2 \cdot I_{\Delta N} < FI < -I_{\Delta N}$ | L | H | H | L |
| e | $FI < -2 \cdot I_{\Delta N}$ | L | L | L | L |

Ein unzulässig hoher Fehlerstrom FI wird daran erkannt, daß die logische Gleichung

$$(P_1 \wedge U_{26}) \vee (P_3 \wedge U_{27}) \vee (P_2 \wedge \overline{U}_{26}) \vee (P_4 \wedge \overline{U}_{27}) = H$$

während mindestens eines der Maskenpulse $P_5$ erfüllt ist.

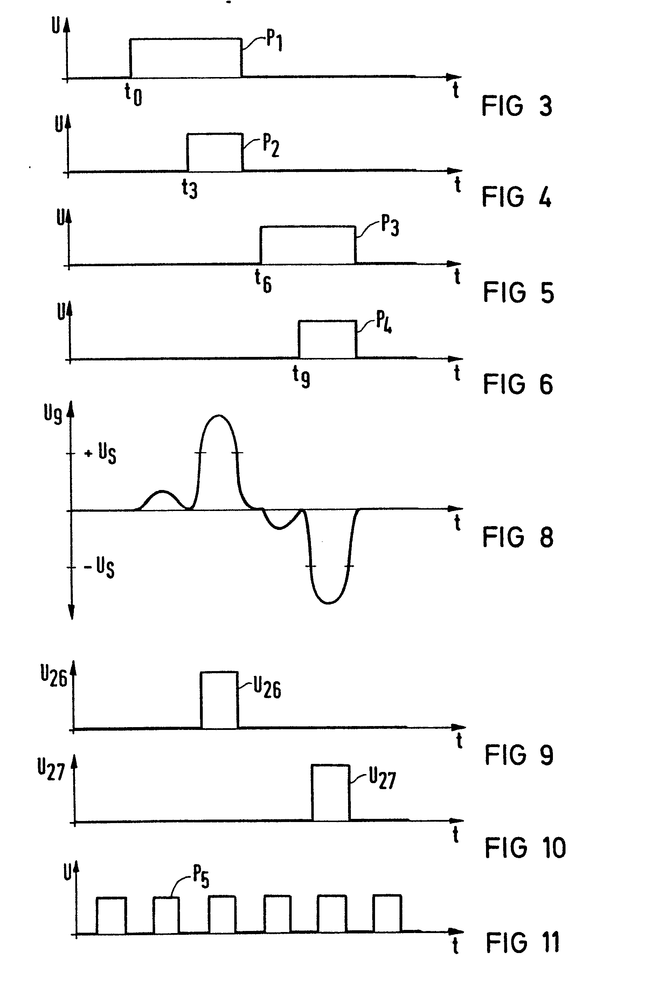

Der Taktgenerator 20 der Ablaufsteuerung liefert nach dem Diagramm der Figur 3 zur Zeit $t_0$ seinen Prüfpuls $P_1$.

Zur Zeit $t_3$ folgt nach dem Diagramm der Figur 4 ein Ummagnetisierungspuls $P_2$, der sich zum Puls $P_1$ summiert und somit im Kern 12 eine zur Ummagnetisierung ausreichende Feldstärke $H_{u2}$ erzeugt. Zur Zeit $t_6$ folgt nach dem Diagramm der Figur 5 ein Prüfpuls $P_3$ und zur Zeit $t_9$ nach dem Diagramm der Figur 6 ein weiterer Ummagnetisierungspuls $P_4$, der eine zur Ummagnetisierung ausreichende Feldstärke $H_{u4}$ erzeugt, wie es in Figur 7 angedeutet ist. Darin ist die jeweils erhaltene positive bzw. negative Schreibfeldstärke $H_w$ an der Schreibwicklung 8 in Abhängigkeit von der Zeit t schematisch veranschaulicht. Die vom Prüfpuls $P_1$ erzeugte Feldstärke $H_{P1}$ ist nicht größer als die Fehlerstromfeldstärke $H_{\Delta N}$. Dagegen überschreitet die $H_{u2}$ des Ummagnetisierungspulses $P_2$ die Koerzitivfeldstärke $H_c$ deutlich und der Kern 12 wird ummagnetisiert. In gleicher Weise wird der Kern 12 durch die Feldstärke $H_{P3} = -H_{\Delta N}$ noch nicht ummagnetisiert, jedoch durch den folgenden Puls $P_4$ mit der Feldstärke $-H_{u4}$.

An der Lesewicklung 9 wird somit nach Figur 8 durch den Prüfpuls $P_1$ zunächst nur ein geringes Lesesignal induziert. Sobald jedoch die Summe 2 der Pulse $P_1$ und $P_2$ wirksam wird, erhält man ein Lesesignal $U_9$, das einen an dem Komparator 26 einstellbaren Grenzwert $U_s$ überschreitet und es wird nach Figur 9 ein digitaler Lesepuls $U_{26}$ mit steilen Flanken gebildet, welcher der Koinzidenzschaltung 30 zugeführt werden kann. Zur Umformung des Anlagesignals $U_9$ in das Digitalsignal $U_{26}$ kann der Komparator 26 einen elektronischen Kippverstärker, beispielsweise einen Schmitt-Trigger, enthalten. In gleicher Weise erfolgt die Bildung des digitalen Lesepulses $U_{27}$ aus dem analogen Lesesignal $U_9$ durch die Schreibpulse $P_3$ und $P_4$ nach den Figuren 8 und 10.

Die Lesepulse $U_{26}$ und $U_{27}$ werden in der Koinzidenzschaltung 30 mit den Schreibpulsen $P_1$ bis $P_4$ verknüpft und die Ausgangspulse dieser Koinzidenzschaltung 30 werden zusammen mit den als Maske dienenden Pulsen $P_5$ nach Figur 11 dem UND-Gatter 38 zugeführt. Es erscheint somit jeweils dann ein Ausgangssignal $U_{38}$, wenn die logische Gleichung während eines der Maskenpulse $P_5$ erfüllt ist. Die Ausgangssignale $U_{38}$ können nun entweder ausschließlich zur Überwachung dienen und z. B. nur der Lampe 40 zugeführt werden oder zugleich zur Abschaltung einer Anlage dienen und zu diesem Zweck dem Auslöser 6 des Schalters 2 zugeführt werden.

Ferner kann die Wirkung des Ausgangssignals der Größe des Differenzstromes FI angepaßt werden. Es kann beispielsweise eine Auslösung des Schalters 2 nur dann vorgesehen sein, wenn ein Fehlerstrom FI in den Meßbereichen c und e vorliegt, während für Differenzströme in den Bereichen b und d die Anzeige 40 anspricht.

## Patentansprüche

1. Verfahren zur Überwachung von Leiterströmen auf einen Differenzstrom, mit folgenden Merkmalen:

1      die Vormagnetisierung eines Magnetkerns (12) wird durch den Differenzstrom geändert,
1.1      der Magnetkern (12) hat eine wenigstens annähernd rechteckige Magnetisierungsschleife mit einer bestimmten Koerzitivfeldstärke ($H_c$),
1.2      der Magnetkern (12) ist mit einer Schreibwicklung (8) und einer Lesewicklung (9) magnetisch gekoppelt,

gekennzeichnet durch folgende Merkmale:

2     an die Schreibwicklung (8) gelieferte, zeitlich getrennte Prüfpulse ($P_1$ und $P_3$) und diesen überlagerte Ummagnetisierungspulse ($P_2$ und $P_4$) erzeugen im Magnetkern Feldstärken ($H_{P1}$, $H_{U2}$, $H_{P3}$ und $H_{U4}$),

2.1    die von den Prüfpulsen ($P_1$ und $P_3$) erzeugten Feldstärken ($H_{P1}$ bzw. $H_{P3}$) sind betragsmäßig gleich der Differenz zwischen der Koerzitivfeldstärke ($H_c$) und dem Betrag der vom maximal zulässigen Fehlerstrom erzeugten Feldstärke ($H_{\Delta N}$),

2.2    die durch die Überlagerung von Prüfpulsen ($P_1$ und $P_3$) und Ummagnetisierungspulsen ($P_2$ bzw. $P_4$) erzeugten Feldstärken ($H_{U2}$ bzw. $H_{U4}$) sind betragsmäßig wenigstens doppelt so groß wie die Koerzitivfeldstärke ($H_c$),

2.3    ein Prüfpuls ($P_1$ bzw. $P_3$) und der diesem überlagerte Ummagnetisierungspuls ($P_2$ bzw. $P_4$) erzeugen im Magnetkern (12) jeweils Feldstärken mit gleichen Vorzeichen, wobei bei jeder neuen Folge von Prüf- und Ummagnetisierungspulsen dieses Vorzeichen geändert wird,

3     die vom maximal zulässigen Differenzstrom erzeugte Feldstärke ($H_{\Delta N}$) ist betragsmäßig kleiner als die Koerzitivfeldstärke ($H_c$),

4     die Summe einer der Feldstärken ($H_{P1}$, $H_{U2}$, $H_{P3}$ und $H_{U4}$) und der vom Differenzstrom erzeugten Feldstärke induziert in der Lesewicklung (9) ein Lesesignal ($U_9$),

5     ein Überwachungssignal ($U_{38}$) wird abgeleitet, wenn das Lesesignal ($U_9$) einen vorgegebenen Grenzwert ($U_s$) während wenigstens eines der Ummagnetisierungspulse ($P_2$ und $P_4$) betragsmäßig unterschreitet.

2. Anordnung zur Überwachung von Leiterströmen auf einen Differenzstrom bestehend aus

1     einem Magnetkern (12) mit wenigstens annähernd rechteckiger Magnetisierungsschleife und einer Koerzitivfeldstärke ($H_c$),

1.1    einer Schreibwicklung (8) und

1.2    einer Lesewicklung (9), wobei

1.3    die Schreibwicklung (8) und die Lesewicklung (9) mit dem Magnetkern (12) magnetisch gekoppelt sind,

gekennzeichnet durch folgende Merkmale:

2     die Anordnung enthält einen Taktgenerator (20),

2.1    der Taktgenerator (20) ist mit Ausgängen für zeitlich getrennte Prüfpulse ($P_1$ und $P_3$) sowie

2.2    für Ummagnetisierungspulse ($P_2$ und $P_4$), die innerhalb des Zeitfensters der Prüfpulse ($P_1$ bzw. $P_3$) liegen, und

2.3    für Maskenpulse ($P_5$) versehen,

3     die Ausgänge des Taktgenerators (20) für die Prüfpulse ($P_1$ und $P_3$) sind mit ersten Treibern (15 bzw. 17) eines Schreibkreises (14) und die Ausgänge für die Ummagnetisierungspulse ($P_2$ und $P_4$) sind mit zweiten Treibern (16 bzw. 18) des Schreibkreises (14) verbunden,

3.1    die Ausgänge der zweiten Treiber (16 und 18) sind über jeweils eine Entkopplungsdiode (22 bzw. 23) mit dem Ausgang jeweils eines der ersten Treiber (15 bzw. 17) verbunden,

3.2    die Ausgänge der ersten Treiber (15 und 17) sind jeweils an verschiedene Enden der Schreibwicklung (8) des Magnetkerns (12) angeschlossen,

3.3    im Magnetkern (12) werden durch den Schreibkreis (14) folgende Feldstärken erzeugt:

3.3.1   die Prüfpulse ($P_1$ und $P_3$) erzeugen jeweils eine Feldstärke ($H_{P1}$ bzw. $H_{P2}$), die betragsmäßig gleich der Differenz zwischen der Koerzitivfeldstärke ($H_c$) und dem Betrag der vom maximal zulässigen Fehlerstrom erzeugten Feldstärke ($H_{\Delta N}$) sind,

3.3.2   die Ummagnetisierungspulse ($P_2$ und $P_4$) erzeugen überlagert mit den Prüfpulsen ($P_1$ bzw. $P_3$) Feldstärken ($H_{U2}$ bzw. $H_{U4}$), die betragsmäßig wenigstens doppelt so groß sind wie die Koerzitivfeldstärke ($H_c$),

3.3.3   ein Prüfpuls ($P_1$ bzw. $P_3$) und der diesem überlagerte Ummagnetisierungspuls ($P_2$ bzw. $P_4$) erzeugen im Magnetkern (12) jeweils Feldstärken mit gleichen Vorzeichen, wobei bei jeder neuen Folge von Prüf- und Ummagnetisierungspulsen dieses Vorzeichen geändert wird,

3.3.4   die vom maximal zulässigen Differenzstrom erzeugte Feldstärke ($H_{\Delta N}$) ist betragsmäßig kleiner als die Koerzitivfeldstärke ($H_c$),

4     die Ausgänge des Taktgenerators (20) für die Prüfpulse ($P_1$ und $P_3$) sind mit dem ersten Eingang eines ersten UND-Gatters (31) bzw. dem ersten Eingang eines zweiten UND-Gatters (32) und die Ausgänge für die Ummagnetisierungspulse ($P_2$ und $P_4$) sind mit dem ersten Eingang eines dritten UND-Gatters (33) bzw. mit dem ersten Eingang eines vierten UND-Gatters (34) einer Koinzidenzschaltung (30) verbunden,

5     die Lesewicklung (9) des Magnetkerns (12) ist mit einem ersten (26) und einem zweiten (27) Komparator verbunden,

5.1    der erste Komparator (26) liefert ein Ausgangssignal, wenn die in der Lesewicklung induzierte Spannung einen positiven Grenzwert ($+U_s$) überschreitet,

5.2 der zweite Komparator (27) liefert ein Ausgangssignal, wenn die in der Lesewicklung induzierte Spannung einen negativen Grenzwert ($-U_s$) unterschreitet,

5.3 der Ausgang des ersten Komparators (26) ist direkt mit dem zweiten Eingang des ersten UND-Gatters (31) und über einen Inverter (28) mit dem zweiten Eingang des dritten UND-Gatters (33) verbunden,

5.4 der Ausgang des zweiten Komparators (27) ist direkt mit dem zweiten Eingang des zweiten UND-Gatters (32) und über einen Inverter (29) mit dem zweiten Eingang des vierten UND-Gatters (34) verbunden,

6 die Ausgänge der ersten bis vierten UND-Gatter (31 bis 34) sind jeweils mit einem der Eingänge eines ODER-Gatters (35) der Koinzidenzschaltung (30) verbunden,

7 der Ausgang des Taktgenerators (20) für die Maskenpulse ($P_5$) und der Ausgang des ODER-Gatters (35) sind mit jeweils einem Eingang eines fünften UND-Gatters (38) verbunden,

8 der Ausgang des fünften UND-Gatters (38) liefert ein Überwachungssignal ($U_{38}$).

**Claims**

1. A method of monitoring conductor currents on a difference current with the following features:

1 the pre-magnetization of a magnetic core (12) is changed by the difference current;

1.1 the magnetic core (12) has an at least approximately rectangular magnetization loop with a specific coercive field strength ($H_c$);

1.2 the magnetic core (12) is magnetically coupled to a write winding (8) and a read winding (9);

characterised by the following features:

2 test pulses ($P_1$ and $P_3$) separated in time are fed to the write winding (8) with re-magnetization pusles ($P_2$ and $P_4$), superimposed upon said test pulses, producing field strengths ($H_{P1}$, $H_{U2}$, $H_{P3}$ and $H_{U4}$) in the magnetic core;

2.1 in terms of value the field strengths ($H_{P1}$ and $H_{P3}$) produced by the test pulses ($P_1$ and $P_3$) correspond to the difference between the coercive field strength ($H_c$) and the amount of the field strength ($H_{\Delta N}$) produced by the maximum permissible fault current:

2.2 in terms of value the field strengths ($H_{U2}$ and $H_{U4}$) produced by the superimposition of test pulses ($P_1$ and $P_3$) and re-magnetization pulses ($P_2$ and $P_4$) are at least twice as great as the coercive field strength ($H_c$);

2.3 a test pulse ($P_1$ or $P_3$) and the re-magnetization pulse ($P_2$ or $P_4$) superimposed upon the latter, respectively produce field strengths with the same sign in the magnetic core (12), where in each new sequence of test and re-magnetization pulses the sign is changed;

3 the field strength ($H_{\Delta N}$) produced by the maximum permissible difference current is smaller than the coercive field strength ($H_c$) in terms of value;

4 the sum of one of the field strengths ($H_{P1}$, $H_{U2}$, $H_{P3}$ and $H_{U4}$) and the field strength produced by the difference current induces a read signal ($U_9$) in the read winding (9);

5 a monitoring signal ($U_{38}$) is derived if the read signal ($U_9$) falls below a predetermined limiting value ($U_S$) in terms of value during at least one of the re-magnetization pulses ($P_2$ and $P_4$).

2. An arrangement for monitoring conductor currents on a difference current consisting of:

1 a magnetic core (12) with an at least approximately rectangular magnetization loop and a coercive field strength ($H_c$);

1.1 a write winding (8); and

1.2 a read winding (9); where

1.3 the write winding (8) and the read winding (9) are magnetically coupled to the magnetic core (12);

characterised by the following features:

2 the arrangement comprises a clock pulse generator (20);

2.1 the clock pulse generator (20) is provided with outputs for test pulses ($P_1$ and $P_2$) separated in time; and

2.2 for re-magnetization pulses ($P_2$ and $P_4$) which lie within the time window of the test pulses ($P_1$ and $P_3$); and

2.3 for mask pulses ($P_5$);

3 the outputs of the clock pulse generator (20) for the test pulses ($P_1$ and $P_3$) are connected to drivers (15 and 17) of a write circuit (14) and the outputs for the re-magnetization pulses ($P_2$ and $P_4$) are connected to second drivers (16 and 18) of the write circuit (14);

3.1 the outputs of the second drivers (16 and 18) are respectively connected to the output of one of the first drivers (15 and 17) by means of a decoupling diode (22 and 23);

3.2 the outputs of the first drivers (15 and 17) are respectively connected to different ends of the write winding (8) of the magnetic core (12);

3.3 the following field strengths are produced by the write circuit (14) in the magnetic core (12):

3.3.1 the test pulses ($P_1$ and $P_3$) respectively produce a field strength ($H_{P1}$ and $H_{P2}$) which in terms of value corresponds of the difference between the coercive field strength ($H_c$) and the amount of the field strength ($H_{\Delta N}$) produced by the maximum permissible fault current;

3.3.2 the re-magnetization pulses ($P_2$ and $P_4$) superimposed on the test pulses ($P_1$ and $P_3$) produce field strengths ($H_{U2}$ and $H_{U4}$) which in terms of value are at least twice as large as the coercive field strength ($H_c$);

3.3.3 a test pulse ($P_1$ or $P_3$) and the re-magnetization pulse ($P_2$ or $P_4$) superimposed thereupon, respectively produce field strengths with identical signs in the magnetic core (12), where in each new sequence of test and re-magnetization pulses this sign is changed;

3.3.4 in terms of value the field strength ($H_{\Delta N}$) produced by the maximum permissible difference current is smaller than the coercive field strength ($H_c$);

4 the outputs of the clock pulse generator (20) for the test pulses ($P_1$ and $P_3$) are connected to the first input of a first AND-gate (31) an to the first input of a second AND-gate (32) and the outputs for the re-magnetization pulses ($P_2$ and $P_4$) are connected to the first input of a third AND-gate (33) and to the first input of a fourth AND-gate (34) of a coincidence circuit (30);

5 the read winding (9) of the magnetic core (12) is connected to a first (26) and a second (27) comparator;

5.1 the first comparator (26) supplies an output signal if the voltage induced in the read winding exceeds a positive limiting value ($+U_s$);

5.2 the second comparator (27) supplies an output signal if the voltage induced in the read winding falls below a negative limiting value ($-U_s$);

5.3 the output of the first comparator (26) is directly connected to the second input of the first AND-gate (31) and to the second input of the third AND-gate (33) by means of an inverter (28);

5.4 the output of the second comparator (27) is directly connected to the second input of the second AND-gate (32) and to the second input of the fourth AND-gate (34) by means of an inverter (29);

6 the outputs of the first to fourth AND-gates (31 to 34) are respectively connected to one of the inputs of an OR-gate (35) of the coincidence circuit (30);

7 the output of the clock pulse generator (20) for the mask pulses ($P_5$) and the output of the OR-gate (35) are respectively connected to an input of a fifth AND-gate (38);

8 the output of the fifth AND-gate (38) supplies a monitoring signal ($U_{38}$).


## Revendications

1. Procédé pour contrôler s'il existe un courant différentiel entre des courants de conducteurs, présentant les caractéristiques suivantes:

1 la pré-aimantation du noyau magnétique (12) est modifiée par le courant différentiel,

1.1 le noyau magnétique (12) possède une boucle d'aimantation au moins approximativement rectangulaire avec une intensité déterminée ($H_c$) du champ coercitif,

1.2 le noyau magnétique (12) est accouplé magnétiquement avec un enroulement d'enregistrement (8) et un enroulement de lecture (9),

remarquable par les caractéristiques suivantes:

2 des impulsions de contrôle ($P_1$ et $P_3$) appliquées à l'enroulement d'enregistrement (8) et séparées dans le temps, et des impulsions d'inversion d'aimantation ($P_2$ et $P_4$) superposées aux impulsions de contrôle, produisent dans le noyau magnétique, des intensités de champ ($H_{P1}$, $H_{U2}$, $H_{P3}$ et $H_{U4}$),

2.1 la valeur des intensités de champ ($H_{P1}$ et $H_{P3}$) produites par les impulsions de contrôle ($P_1$ et $P_3$) est égale à la différence entre l'intensité ($H_c$) du champ coercitif et la valeur de l'intensité de champ ($H_{\Delta N}$) produite par le courant de fuite maximal admissible,

2.2 la valeur des intensités de champ ($H_{U2}$ ou $H_{U4}$), produite par la superposition d'impulsions de contrôle ($P_1$ ou $P_3$) et d'impulsions d'inversion d'aimantation ($P_2$ ou $P_4$), est égale au moins au double de l'intensité de champ ($H_c$) du champ coercitif,

2.3 une impulsion de contrôle ($P_1$ ou $P_3$) et l'impulsion d'inversion d'aimantation ($P_2$ ou $P_4$), superposée à cette impulsion de contrôle, produisent dans le noyau magnétique (12) les intensités de champ respectives possédant le même signe, ce signe étant modifié lors de chaque nouveau train d'impulsions de contrôle et d'inversion d'aimantation,

3 la valeur de l'intensité de champ ($H_{\Delta N}$) produite par le courant différentiel maximum admissible est inférieure à l'intensité ($H_c$) du champ coercitif,

4 la somme de l'une des intensités de champ ($H_{P1}$, $H_{U2}$, $H_{P3}$ et $H_{U4}$) et de l'intensité de champ produite par le courant différentiel induit un signal de lecture ($U_9$) dans l'enroulement de lecture (9),

5 un signal de contrôle ($U_{38}$) est délivré lorsque la valeur du signal de lecture ($U_9$) tombe au-dessous d'une valeur limite prédéterminée ($U_s$) pendant au moins l'une des impulsions d'inversion d'aimantation ($P_2$ et $P_4$).

2. Dispositif pour contrôler s'il existe un courant différentiel entre des courants de conducteurs, constitué par

1 un noyau magnétique (12) comportant une boucle d'aimantation au moins approximativement rectangulaire et une intensité ($H_c$) du champ coercitif,

1.1 un enroulement d'enregistrement (8) et

1.2 un enroulement de lecture (9),

1.3 l'enroulement d'enregistrement (8) et l'enroulement de lecture (9) étant accouplés magnétiquement au noyau magnétique (12),

remarquable par les caractéristiques suivantes:

2 le dispositif contient un générateur de cadence (20),

2.1 le générateur de cadence (20) est équipé de sorgies pour des impulsions de contrôle ($P_1$ et $P_3$) séparées dans le temps ainsi que

2.2 pour des impulsions d'inversion d'aimantation ($P_2$ et $P_4$) qui sont situées à l'intérieur du créneau temporel des impulsions de contrôle ($P_1$ ou $P_3$), et

2.3 pour des impulsions de masque ($P_5$),

3 les sorties du générateur de cadence (20) pour les impulsions de contrôle ($P_1$ et $P_3$) sont reliées aux premiers étages d'attaque (15, 17) d'un circuit d'enregistrement (14) et les sorties pour les impulsions d'inversion d'aimantation ($P_2$ et $P_4$) sont reliées à des seconds étages d'attaque (16 ou 18) du circuit d'enregistrement (14),

3.1 les sorties des seconds étages d'attaque (16 et 18) sont reliées par l'intermédiaire de diodes respectives de découplage (22 ou 23) à la sortie d'un étage respectif faisant partie des premiers étages d'attaque (15 ou 17),

3.2 les sorties des premiers étages d'attaque (15 et 17) sont reliées respectivement à différentes extrémités de l'enroulement d'enregistrement (8) du noyau magnétique (12),

3.3 le circuit d'enregistrement (14) produit dans le noyau magnétique (12) les intensités de champ suivantes:

3.3.1 les impulsions de contrôle ($P_1$ et $P_3$) produisent une intensité de champ respective ($H_{P1}$ ou $H_{P2}$), dont la valeur est égale à la différence entre l'intensité ($H_c$) du champ coercitif et la valeur de l'intensité de champ ($H_{\Delta N}$) produite par le courant de fuite maximal admissible,

3.3.2 les impulsions d'inversion d'aimantation ($P_2$ et $P_4$) produisent, en étant superposées aux impulsions de contrôle ($P_1$ ou $P_3$), des intensités de champ ($H_{U2}$ ou $H_{U4}$), dont la valeur est égale au moins au double de l'intensité ($H_c$) du champ coercitif,

3.3.3 une impulsion de contrôle ($P_1$ ou $P_3$) et l'impulsion d'inversion d'aimantation ($P_2$ ou $P_4$), superposée à cette impulsion de contrôle, produisent dans le noyau magnétique (12) des intensités de champ respectives possédant le même signe, ce signe étant modifié lors de chaque nouveau train d'impulsions de contrôle et d'inversion d'aimantation,

3.3.4 la valeur de l'intensité de champ ($H_{\Delta N}$) produite par le courant différentiel admissible maximum est inférieure à l'intensité ($H_c$) du champ coercitif,

4 les sorties du générateur de cadence (20) pour les impulsions de contrôle ($P_1$ et $P_3$) sont reliées à la première entrée d'une première porte ET (31) ou la première entrée d'une seconde porte ET (32) et les sorties pour les impulsions d'inversion d'aimantation ($P_2$ et $P_4$) sont reliées à la première entrée d'une troisième porte ET (33) ou à la première entrée d'une quatrième porte ET (34) d'un circuit à coïncidence (30),

5 l'enroulement de lecture (9) du noyau magnétique (12) est relié à un premier comparateur (26) et à un second comparateur (27),

5.1 le premier comparateur (26) délivre un signal de sortie lorsque la tension induite dans l'enroulement de lecture dépasse une valeur limite positive ($+U_s$),

5.2 le second comparateur (27) délivre un signal de sortie lorsque la tension induite dans l'enroulement de lecture tombe au-dessous d'une valeur limite négative ($-U_s$),

5.3 la sortie du premier comparateur (26) est reliée directement à la seconde entrée de la première porte ET (31) et, par l'intermédiaire de l'inverseur (28), à la seconde entrée de la troisième porte ET (33),

5.4     la sortie du second comparateur (27) est reliée directement à la seconde entrée de la seconde porte ET (32) et, par l'intermédiaire d'un inverseur (29), à la seconde entrée de la quatrième porte ET (34),

6     les sorties des quatre premières portes ET (31 à 34) sont reliées respectivement à l'une des entrées d'une porte OU (35) du circuit à coïncidence (39),

7     la sortie du générateur de cadence (20) pour les impulsions de masque (P$_5$) et la sortie de la porte OU (35) sont reliées à des entrées respectives d'un cinquième porte ET (38),

8     la sortie de la cinquième porte ET (38) délivre un signal de contrôle (U$_{38}$).

FIG 1

FIG 2

FIG 7

FIG 3

FIG 4

FIG 5

FIG 6

FIG 8

FIG 9

FIG 10

FIG 11